(19) Europäisches Patentamt
European Patent Office
Office européen des brevets

(11) EP 4 389 777 A1

(12) EUROPEAN PATENT APPLICATION

(43) Date of publication:
26.06.2024 Bulletin 2024/26

(21) Application number: 22215948.5

(22) Date of filing: 22.12.2022

(51) International Patent Classification (IPC):
C08F 2/00 (2006.01)          C08F 210/16 (2006.01)

(52) Cooperative Patent Classification (CPC):
(C-Sets available)
C08F 210/16                                      (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• Borealis AG
1020 Vienna (AT)
• Abu Dhabi Polymers Co. Ltd (Borouge) - Sole
Proprietorship L.L.C.
Abu Dhabi (AE)

(72) Inventors:
• KUMAR, Ashish
Abu Dhabi (AE)
• ANTONY, Nisha
Abu Dhabi (AE)
• KALIAPPAN, Senthil Kumar
Abu Dhabi (AE)

(74) Representative: Kador & Partner Part mbB
Corneliusstraße 15
80469 München (DE)

(54) **HIGH DENSITY POLYETHYLENE FOR PIPE APPLICATIONS WITH IMPROVED PRESSURE PERFORMANCE AND MECHANICAL PROPERTIES**

(57) The present invention concerns a multimodal polyethylene composition comprising a base resin comprising a copolymer of ethylene and at least one comonomer selected from alpha-olefins having from 3 to 10 carbon atoms, wherein the base resin has (a) a density of at least 945.0 kg/m³ and not more than 955.0 kg/m³, determined according to ISO 1183-1:2004, (b) a melt flow rate $MFR_5$ (190°C, 5 kg), determined according to ISO 1133, of from 0.15 to 0.25 g/10 min., and wherein the polyethylene composition has (c) a molecular chain length, determined according to Quantitative $^{13}C\{1H\}$ NMR analysis, of at least 850 and not more than 1200, and (d) a tensile modulus of at least 900 MPa and not more than 1200 MPa, determined according to ISO 527-3, a method for its production, a pipe or fitting comprising it and its use for increasing the pressure resistance and/or the slow crack growth resistance of a pipe or fitting. The multimodal polyethylene composition provides improved balance of pressure resistance and slow crack growth resistance with improved mechanical properties, such as tensile properties, strain hardening modulus, and impact performance.

Fig. 1

(52) Cooperative Patent Classification (CPC): (Cont.)

C-Sets
**C08F 210/16, C08F 4/6543;**
**C08F 210/16, C08F 210/14, C08F 2500/04,**
**C08F 2500/05, C08F 2500/07, C08F 2500/09,**
**C08F 2500/12, C08F 2500/27, C08F 2500/31,**
**C08F 2500/39;**
C08F 210/16, C08F 2/001;
C08F 210/16, C08F 210/14, C08F 2500/04,
C08F 2500/05, C08F 2500/07, C08F 2500/09,
C08F 2500/12, C08F 2500/27, C08F 2500/31,
C08F 2500/39, C08F 2500/13;
C08F 210/16, C08F 210/14, C08F 2500/07,
C08F 2500/12

**Description**

The present invention concerns a multimodal polyethylene composition useful for pipe applications with improved balance of pressure resistance and slow crack growth resistance with improved mechanical properties. The present invention also concerns a method of producing such a multimodal polyethylene composition and a pipe or a fitting comprising such a multimodal polyethylene composition.

**Background of the Invention**

Pipes constructed from polymer materials have a multitude of uses, such as fluid transport, i.e. the transport of liquids, slurries and gases, e.g. water or natural gas. During transport, it is normal for the fluid to be pressurized. Moreover, the transported fluid may have varying temperatures, usually within the range from about 0°C to about 50°C. Such pressurized pipes are preferably constructed from polyolefin plastics, usually unimodal or bimodal ethylene plastics such as medium density polyethylene (MDPE; density: 930-942 kg/m$^3$) and high density polyethylene (HDPE; density: 942-965 kg/m$^3$) or polypropylene compositions

The expression "pressure pipe" used herein refers to a pipe which, when used, is subjected to a positive pressure, that is the pressure inside the pipe being higher than the pressure outside the pipe.

Polymeric pipes are generally manufactured by extrusion, or, to a small extent, by injection moulding. A conventional plant for extrusion of polymer pipes comprises of an extruder, a die-head, a calibrating device, cooling equipment, a pulling device, and a device for cutting and/or for coiling up the pipe.

The manufacture of polyethylene materials to be used in pressure pipes is discussed for example in an article by Scheirs et al (Scheirs, Bohm, Boot and Leevers: PE100 Resins for Pipe Applications, TRIP Vol. 4, No 12 (1996) pp. 408-415).

Pressure pipe materials are classified according to the long-term hydrostatic strength of thermoplastic materials in pipe form by extrapolation method of ISO 9080 and ISO12162, for example PE80 or PE100. The ISO9080 Minimum Required Strength (MRS) classification defines that a PE100 material will have a lifetime of at least 50 years at 20 °C using internal hoop stress of 10 MPa. The higher MRS of PE100 material is usually obtained by using polyethylene compositions with higher densities.

Multimodal high density polyethylene (HDPE) compositions are well known for pipe applications, especially as PE100 pressure pipes. PE100 materials are usually used for applications, such as for pressurized gas pipes, drinking water pipes, sewer pipes or industrial pipes.

EP 2 743 305 A1 discloses a pipe comprising a high density polyethylene blend comprising (A) 55 to 95 wt.-% of a high density multimodal polyethylene component having a density of at least 940 kg/m$^3$, and (B) 5 to 45 wt.-% of an ultra-high molecular weight polyethylene homopolymer having a nominal viscosity molecular weight Mv of 1,000,000 to 4,000,000 g/mol; and wherein said blend has an MFR$_{21}$ of 10.0 g/10min or less and a density of at least 940 kg/m$^3$. The pipe can have a pressure resistance of at least 100 h at a stress of 14.5 MPa and/or at least 1000 h at 13.9 MPa. Moreover, such pipes show sagging resistance and the blend exhibits good homogeneity.

EP 3 293 208 A1 discloses a bimodal polyethylene composition comprising a low molecular weight polyethylene homopolymer fraction and high molecular weight polyethylene copolymer fraction, where the high molecular weight polyethylene fraction has a C4 to C10 alpha-olefin comonomer content, preferably 1-butene, of 0.25 to 3 mol%, wherein the content of the low molecular weight polyethylene with respect to the total amount of the bimodal polyethylene composition is from 40-65 wt.-%; and the bimodal polyethylene composition has a MWD$_{2/1}$ of more than 0.7 and a Mw$_{2/1}$ of more than 15. Such a bimodal polyethylene composition has an improved balance between pressure resistance conforming to PE112 and slow crack growth resistance for more than 3500 h.

New installation techniques, such as trenchless and sand bed-free installation, demand polyethylene pipe resins with higher resistance to slow crack growth. The requirements for slow crack growth resistance become more and more stringent and many of the existing products fail to consistently meet those requirements together with the required pressure performance

Such applications require that the pipe material meets a wide range of rheological, mechanical and pressure performance properties. Many of these properties are contradictory properties that are difficult to achieve simultaneously, as improvement in one property leads to deterioration of the other property. For example, trying to improve hydrostatic pressure performance (HPT), usually by increasing the density of the material leads to reduction in slow crack growth resistance performance or notched pipe test (NPT) performance. Increasing NPT performance, typically requires increased co-monomer content or degree of tie chains present in the polymer, which will negatively impact HPT performance. In a similar manner, HPT performance at room temperature vs. elevated temperatures as well as room temperature impact vs low temperature impact are also often seen to be counteractive in nature. Apart from mechanical and pressure performance, several additional key properties have to be maintained as performance parameters for HDPE pipes, such as resistance to sagging, and aesthetics e.g. surface smoothness and appearance.

Thus, there is the need for multimodal polyethylene compositions that at least meet the PE100 requirements and show an improved balance of properties as regards slow crack growth resistance,, hydrostatic pressure resistance at room temperature and at elevated temperatures, tensile properties, strain hardening modulus, impact performance and processability.

**Summary of the Invention**

The objectives underlying the present invention are to provide a multimodal polyethylene composition that addresses the above-described needs and challenges.

These objects are achieved by the provision of a multimodal polyethylene composition according to the appended claims below that addresses the above-described needs and disadvantages.

Accordingly, the present invention provides a multimodal polyethylene composition comprising a base resin comprising a copolymer of ethylene and at least one comonomer selected from alpha-olefins having from 3 to 10 carbon atoms,

wherein the base resin has

(a) a density of at least 945.0 $kg/m^3$ and not more than 955.0 $kg/m^3$, determined according to ISO 1183-1,

(b) a melt flow rate $MFR_5$ (190°C, 5 kg), determined according to ISO 1133, of from 0.15 to 0.25 g/10 min.,

and wherein the polyethylene composition has

(c) a molecular chain length, determined according to Quantitative $^{13}C\{^1H\}$ NMR analysis, as described in the experimental section below, of at least 850, and not more than 1200

(d) a tensile modulus of at least 900 MPa and not more than 1200 MPa, determined according to ISO 527-2.

Preferred features of the multimodal polyethylene composition of the invention are defined in the dependent claims.

The present invention further relates to a method of producing the above multimodal polyethylene composition comprising the steps of polymerizing ethylene and at least one comonomer selected from alpha-olefins having from 3 to 10 carbon atoms in at least two polymerization stages in the presence of a polymerization catalyst, preferably a Ziegler-Natta catalyst, wherein said at least one comonomer is present in at least one of the polymerization stages.

The present invention further relates to a pipe or a fitting comprising the above multimodal polyethylene composition.

The present invention further relates to the use of the above multimodal polyethylene composition for increasing the pressure resistance and/or the slow crack growth resistance of a pipe or fitting.

**Brief Description of the Figures**

Fig. 1 shows a plot of lamellar thickness range and % lamellar fractions measured for the inventive examples !E1 and IE2 and for the comparative examples CE1 to CE3.

Fig. 2 shows a correlation between co-monomer content vs. thickest lamellae (> 21.7nm) and second thickest lamellae (>8.1 - ≤21.7nm) fractions, according to SSA data for the inventive examples !E1 and IE2 and for the comparative examples CE1 to CE3.

Fig. 3 shows a correlation between strain hardening modulus and tensile modulus for the inventive examples !E1 and IE2 and for the comparative examples CE1 to CE3.

**Detailed Description of the Invention**

Definitions

A polyethylene composition according to the present invention denotes a polymer derived from at least 50 mol-% ethylene monomer units and additional comonomer units.

An ethylene homopolymer thereby denotes a polymer consisting essentially of ethylene monomer units. Due to the requirements of large-scale polymerization, it may be possible that the ethylene homopolymer includes minor amounts of comonomer units, which usually is below 0.1 mol-%, preferably below 0.05 mol-%, most preferably below 0.01 mol-% of the ethylene homopolymer.

The term 'base resin' denotes the polymeric component of the composition.

The term 'different' denotes that a polymeric component differs from another polymeric component in at least one measureable property. Suitable properties for differentiating polymeric components are weight average molecular weight (Mw), melt flow rate $MFR_2$ or $MFR_5$, density or comonomer content.

Base resin

The base resin comprised in the multimodal polyethylene composition of the invention preferably, but not necessarily comprises a first ethylene homo- or copolymer component (A) and a second ethylene homo- or copolymer component (B).

According to the present invention described above, the base resin may preferably consist of the first ethylene homo- or copolymer component (A) and the second ethylene homo- or copolymer component (B).

The base resin may further comprise further polymer component(s) different to the first ethylene homo- or copolymer components (A) and (B). The further polymer component(s) can be introduced to the base resin or the polyethylene composition either by melt mixing or compounding or in an additional reaction stage of the multi-stage process for producing base resin of the polyethylene composition.

Components (A) and (B) may preferably differ in their weight average molecular weight in that component (B) has a higher weight average molecular weight as component (A). The differences in weight average molecular weight can be seen from the melt flow rate $MFR_2$ of component (A) which is higher than the melt flow rate $MFR_5$ of the polyethylene composition.

The $MFR_2$ (2.16 kg, 190°C) of component (A) may preferably be equal to or more than 50 g/10 min, more preferably equal to or more than 80 g/10 min, even more preferably equal to or more than 100 g/10 min.

Further, the $MFR_2$ (2.16 kg, 190°C) of component (A) may preferably be equal to or less than 500 g/10 min, more preferably equal to or less than 475 g/10 min, even more preferably equal to or less than 450 g/10 min.

Component (A) can be a copolymer of ethylene with one or more alpha-olefin comonomers having from 3 to 12 carbon atoms. Preferably the alpha-olefin comonomers are selected from alpha-olefins having from 4 to 8 carbon atoms, such as 1-butene, 1-hexene, 4-methyl-1-pentene and 1-octene. Especially preferred are 1-butene and 1-hexene. Mostly preferred is 1-butene.

However, it is preferred that component (A) is an ethylene homopolymer. The homopolymer preferably has a density of at least 960 kg/m$^3$ and more preferably of at least 965 kg/m$^3$.

Further, component (A) is preferably present in the base resin in an amount of 45 to 55 wt.-%, more preferably 47 to 53 wt.%, with respect to the base resin.

Component (B) is preferably a copolymer of ethylene and at least one alpha-olefin comonomer units with 3 to 12 carbon atoms. Preferably the alpha-olefin comonomers are selected from alpha-olefins having from 4 to 8 carbon atoms, such as 1-butene, 1-hexene, 4-methyl-1-pentene and 1-octene. Especially preferred are 1-butene and 1-hexene and most preferred is 1-hexene.

Component (B) may further comprise further comonomer units different from alpha-olefin comonomers such as dienes, polar comonomers or silicon-containing comonomers. It is, however, preferred that the component (B) only contains alpha-olefin monomers as comonomer units.

The content of units derived from at least one alpha-olefin comonomer having from 3 to 12 carbon atoms in fraction (B) is preferably 0.6 to 2.0 wt.-%, more preferably 0.70 to 1.5 wt.-%.

Further, component (B) is preferably present in the base resin in an amount of 55 to 45 wt.-%, more preferably 53 to 47 wt.-%, with respect to the base resin.

The weight ratio of the first ethylene homo- or copolymer component (A) to the second ethylene copolymer component (B) is preferably from 45:55 to 55:45 , more preferably from 46:54 to 54:46 , and most preferably from 47:53to 53:47 .

Preferably, the base resin consists only of the above defined fractions (A) and (B).

The base resin preferably has a density of equal to or more than 946 kg/m$^3$, more preferably of equal to or more than 948 kg/m$^3$.

Further, the base resin preferably has a density of equal to or less than 955 kg/m$^3$, more preferably of equal to or less than 953 kg/m$^3$.

The base resin according to the present invention preferably is a copolymer of ethylene with at least one alpha-olefin comonomer having from 3 to 12 carbon atoms. Preferably the alpha-olefin comonomers are selected from alpha

5

olefins having from 4 to 8 carbon atoms, such as 1-butene, 1-hexene, 4-methyl-1-pentene and 1-octene. Especially preferred are 1- butene and 1-hexene. Mostly preferred is 1-hexene.

The ethylene copolymer may further comprise further comonomer units different from alpha-olefin comonomers such as dienes, polar comonomers or silicon-containing comonomers. It is, however, preferred that the ethylene copolymer only contains alpha-olefin monomers as comonomer units.

The content of units derived from at least one alpha-olefin comonomer having from 3 to 12 carbon atoms in the base resin is preferably 0.6 to 1.5 wt.-%, more preferably 0.7 to 1.2 wt.-%.

Polyethylene composition

In addition to the above-defined base resin, the multimodal polyethylene composition according to the invention preferably comprises usual additives for utilization with polyolefins, such as pigments (e.g. carbon black), stabilizers (e.g. antioxidant agents), antacids and/or UV stabilizers, antistatic agents and utilization agents (such as processing aid agents). Preferably, the amount of these additives is 10 wt.-% or below, more preferably 8 wt.-% or below, even more preferably 5 wt.-% or below, based on the total polyethylene composition (100 wt.-%).

Preferably, the multimodal polyethylene composition according to the invention comprises carbon black in an amount of 1.0 to 8.0 wt.-%, more preferably 1.5 to 6.0 wt.-%, even more preferably in an amount of 1.7 to 4.0 wt.-%, based on the total polyethylene composition (100 wt.-%).

The amount of additives different from carbon black preferably is 0 to 1 wt.-%, more preferably 0.001 to 0.5 wt.-%.

Part or all of the optional additives and or carbon black may be incorporated to the base resin during the production of base resin, e.g. during the pelletizing step of the base resin powder obtained from the polymerization reactor or during the compounding step of the polymer composition.

The multimodal polyethylene composition according to the present invention may preferably have a melt flow rate $MFR_5$ (190°C, 5 kg) of not more than 0.5 g/10 min, preferably not more than 0.3 g/10min, and preferably at least 0.01 g/10 min, more preferably at least 0.05 g/10min, even more preferably at least 0.10 g/10min.

The above described multimodal polyethylene composition according to the present invention provides a multitude of improvements over conventional high density polyethylene compositions for pipe applications, such as

- Superior HPT performance at room temperature (20°C) as well as elevated temperature (80°C), together with improved or comparable NPT performance In the prior art, typically improvement in HPT is shown to reduce NPT performance;

- Improved balance of HPT and NPT performance even with low co-monomer content, as compared to conventional multimodal polyethylene compositions or pipe comprising the same;

- Simultaneous improvement in strain hardening modulus and tensile modulus;

- Improved balance of low temperature impact resistance and room temperature impact resistance, even at low co-monomer content;

- Narrower molecular weight distribution, as compared to conventional multimodal polyethylene compositions.

The multimodal polyethylene composition according to the present invention preferably has a molecular chain length, determined according to Quantitative $^{13}C\{^1H\}$ NMR analysis, as described in the experimental section below, of at least 900, more preferably at least 950.

The multimodal polyethylene composition according to the present invention preferably has:

(e) a strain hardening modulus of at least 50 MPa, more preferably in the range of from 50 to 85 MPa, even more preferably in the range of from 50 to 75 MPa, determined as described in the experimental section below.

The multimodal polyethylene composition according to the present invention preferably has:

(f) a content of a lamellar fraction having a lamellar thickness of more than 21.7 nm, determined according to the self-nucleation and annealing method (SSA) as described in the experimental section below, of from 28 to 52 wt .-%, more preferably in the range of from 28 to 50 wt.-%, even more preferably in the range of from 30 to 50 wt.-%, based on the total crystalline fraction.

The multimodal polyethylene composition according to the present invention preferably has:

(g) a content of a lamellar fraction having a lamellar thickness in the range of greater than 11.8 nm to 21.7 nm, determined according to the self-nucleation and annealing method (SSA) as described in the experimental section below, of from 33.0 to 52 wt .-%, more preferably in the range of from 34 to 51 wt.-%, even more preferably in the range of from 35 to 50 wt.-%, based on the total crystalline fraction.

The multimodal polyethylene composition according to according to the present invention preferably has:
(h-1) a hydrostatic pressure resistance (HPT) at 80 °C and 5.6 MPa, determined according to ISO 1167-1:2006 and as described in the experimental section below, of at least 2000 h failure time, more preferably at least 3000 h failure time, even more preferably at least 3500 h failure time.

The multimodal polyethylene composition according to according to the present invention preferably has:
(h-2) a hydrostatic pressure resistance (HPT) at 20 °C and 12.4 MPa, determined according to ISO 1167-1:2006 and as described in the experimental section below, of at least 1300 h failure time, more preferably at least 1400 h failure time, even more preferably at least 1500 h failure time.

The multimodal polyethylene composition according to according to the present invention preferably has:
(h-3) a slow crack growth resistance in a notched pipe test (NPT) according to ISO 13479-2009 at 80 °C and 4.6 MPa, and as described in the experimental section below, of at least 500 h failure time, more preferably at least 600 h failure time, even more preferably at least 700 h failure time.

The multimodal polyethylene composition according to according to the present invention preferably has:
(i) a Charpy notched impact strength (NIS), determined according to ISO 179-1 at 23 °C and as described in the experimental section below, of at least 15 kJ/m$^2$, more preferably at least 18 kJ/m$^2$, even more preferably at least 20 kJ/m$^2$.

The multimodal polyethylene composition according to according to the present invention preferably has:
(j) a viscosity at a shear stress of 747 Pa (eta747), determined as described in the experimental section below, of at least 500 Pa • s, more preferably at least 550 Pa • s, even more preferably at least 600 Pa • s.

The multimodal polyethylene composition according to the present invention, wherein the base resin preferably has:
(k) a comonomer content of not more than 1.5 wt .-%, more preferably not more than 1.3 wt .-%, even more preferably not more than 1.2 wt .-%, based on the total weight of the base resin.

The multimodal polyethylene composition according to the present invention, wherein the base resin preferably has:
(l) a degree of polymerization of at least 450, more preferably at least 475, even more preferably at least 500, determined according to Quantitative $^{13}$C{$^1$H} NMR analysis, as described in the experimental section below.

The present invention has surprisingly found that the multimodal polyethylene composition described above and in the claims below has significantly higher chain length which has an important impact on various pipe performance properties such as hydrostatic pressure resistance (HPT) at room temperature as well as at elevated temperature and slow crack growth resistance in a notched pipe test (NPT) at room temperature as well as at low temperature. It was further surprisingly found that the multimodal polyethylene composition of the present invention could be produced with relatively low co-monomer content as compared to multimodal polyethylene compositions of the prior art, leading to increased densities together with improved balance of HPT and NPT performance and improved balance of low temperature impact and room temperature impact performance.

The multimodal polyethylene compositions of the present invention are usually made by a multi-stage process, i.e. a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerization reactions used in each stage may involve conventional ethylene homo-polymerization or copolymerization reactions, e.g. gas phase, slurry phase, liquid phase polymerizations, using conventional reactors, e.g. loop reactors, gas phase reactors, batch reactors, etc.

The polymerization may be carried out continuously or batchwise, preferably the polymerization is carried out continuously.

Known two-stage processes are for instance liquid phase-liquid phase processes, gas phase-gas phase processes and liquid phase-gas phase processes. It is also known that these two-stage processes can further be combined with one or more additional polymerization steps selected from gas phase, slurry phase or liquid phase polymerization processes. Such multistage processes are described e.g. in EP 2 743 305 A1 or EP 3 088 458 A1.

Multimodal polyethylene compositions of the present invention are preferably produced in a multistage process, where lower molecular weight and higher molecular weight polymers (components) are produced in different polymerization steps, in any order.

A relatively low density (or high molecular weight (HMW) fraction) polymer can be prepared in the first polymerization step and the relatively high density (or low molecular weight (LMW) fraction) polymer in the second polymerization step. This can be referred to as the reverse mode. Alternatively, the low molecular weight polymer can be prepared in the first polymerization step and the high molecular weight polymer in the second polymerization step. This can be referred to as the normal mode and is preferred.

A two-stage process can, for example be a slurry-slurry or a gas phase-gas phase process, particularly preferably a slurry-gas phase process. Optionally the process according to the invention can comprise one or two additional polymerization steps.

These optional one or two additional polymerization steps preferably comprise gas phase polymerization steps.

The slurry and gas phase stages may be carried out using any conventional reactors known in the art. A slurry phase polymerization may, for example, be carried out in a continuously stirred tank reactor; a batchwise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US-A-4582816 , US-A-3405109 , US-A-3324093 , EP-A-479186 and US- A-5391654 .

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

The slurry and gas phase processes are well known and described in the prior art.

In a preferred embodiment of the invention the low molecular weight (LMW) component is produced first and the high molecular weight (HMW) component is produced in the presence of LMW component. In this case the LMW component is the first polyethylene component (A) and the HMW component is the second polyethylene component (B).

The polymerization catalysts for the production of the base resin may include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a $MgCl_2$-based ZN catalyst.

The Ziegler-Natta catalyst further preferably comprises a group 4 (group numbering according to new IUPAC system) metal compound, preferably titanium, magnesium dichloride and aluminum.

The catalyst may be commercially available or be produced in accordance or analogously to the literature. For the preparation of the preferable catalyst usable in the invention, reference is made to WO 2004/055068 A1, WO 2004/055069 A1 of Borealis AG and WO 2015/078924 of Abu Dhabi Polymers Co., Ltd. (Borouge)/Borealis AG and EP 0 810 235 A1. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235 A1.

The resulting end product consists of an intimate mixture of the polymers from the reactors, the different molecular-weight-distribution curves of these polymers together forming a molecular-weight-distribution curve having a broad maximum or several maxima, i.e. the end product is a multimodal polymer mixture.

It is preferred that the multimodal polyethylene composition according to the invention is a bimodal polyethylene mixture consisting of polymer components (A) and (B), optionally further comprising a small prepolymerization fraction. However, it is preferred to conduct the process without a prepolymerization step. It has surprisingly been found that the above polymerization process without a prepolymerization step leads to polyethylene compositions showing a significantly higher molecular chain length and chain microstructure expressed by lamellar morphology, which can be determined by SSA data, as described in the experimental section below. The increase in molecular chain length and modification of chain microstructure leads to the significant improvement of mechanical properties, particularly improved balance between hydrostatic pressure resistance (HPT) and slow crack growth resistance (NPT).

It is also preferred that this bimodal polymer mixture has been produced by polymerization as described above under different polymerization conditions in two or more polymerization reactors connected in series. Owing to the flexibility with respect to reaction conditions thus obtained, it is most preferred that the polymerization is carried out in a loop reactor/a gas-phase reactor combination.

Preferably, the polymerization conditions in the preferred two-stage method are so chosen that the comparatively low-molecular weight polymer having no content of comonomer is produced in one stage, preferably the first stage, owing to a high content of chain-transfer agent (hydrogen gas), whereas the high-molecular weight polymer having a content of comonomer is produced in another stage, preferably the second stage. The order of these stages may, however, be reversed.

In the preferred embodiment of the polymerization in a loop reactor followed by a gas-phase reactor, the polymerization temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100 °C, and most preferably is 82 to 97 °C. The pressure in the loop reactor is typically from 1 to 150 bar, preferably from 1 to 100 bar and the pressure in the gas phase reactor is typically at least 10 bar, preferably at least 15 bar but typically not more than 30 bar, preferably not more than 25 bar.

The polymerization in the slurry phase reactor usually takes place in an inert diluent, typically a hydrocarbon diluent which is selected from a group comprising C3 to C8 hydrocarbons, such as methane, ethane, propane, n-butane, isobutane, hexanes such as n-hexane, heptanes, octanes etc. or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerization steps. The ethylene content in the fluid phase of the slurry in the slurry phase reactor may be from 0.5 to 50 % by mole, preferably from 1 to 20 % by mole, and in particular from 2 to 10 % by mole.

In a preferred embodiment of a gas phase reactor, the polymerization takes place in a fluidised bed gas phase reactor where an olefin is polymerized in the presence of a polymerization catalyst in an upwards moving gas stream. The reactor typically contains a fluidised bed comprising the growing polymer particles containing the active catalyst located above a fluidisation grid. The polymer bed is fluidised with the help of a fluidisation gas comprising the olefin monomer, eventually comonomer(s), eventually chain growth controllers or chain transfer agents, such as hydrogen, and eventually inert gas.

Also antistatic agent(s) may be introduced into the gas phase reactor if needed. Suitable antistatic agents and methods to use them are disclosed, amongst others, in US-A-5,026,795, US-A-4,803,251, US-A-4,532,311, US-A-4,855,370 and EP-A-560 035 A1. They are usually polar compounds and include, amongst others, water, ketones, aldehydes alcohols.

A chain-transfer agent, preferably hydrogen, is added as required to the reactors, and preferably 500 to 1200 moles of $H_2$/kmoles of ethylene, more preferably 550 to 750 moles of $H_2$/kmoles of ethylene are added to the reactor, when the LMW component is produced in this reactor, and 0 to 100 moles of $H_2$/kmoles of ethylene are added to the gas phase reactor when this reactor is producing the HMW component.

The polymerization conditions as well as the feed streams and the residence time in the reactors are preferably adapted as such to produce a base resin as described above or in the claims below.

Optionally, additives or other polymer components can be added to the composition during the compounding step in the amount as described above. Preferably, the polyethylene composition of the invention obtained from the reactor is compounded in the extruder together with additives in a manner known in the art.

The composition of the invention, preferably if produced in a process comprising a compounding step, wherein the composition, i.e. the blend, which is typically obtained as a polyolefin base resin powder from the reactor, is extruded in an extruder and then pelletised to polymer pellets in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

The present invention is further concerned with an article comprising, preferably consisting of, the multimodal polyethylene composition as described above or below in claims. Preferably, the article is a pipe or a pipe fitting comprising, preferably consisting of the multimodal polyethylene composition as described above or below in claims. The pipe preferably meets at least the PE80 standard, more preferably the PE100 standard.

The pipe preferably complies with the hydrostatic pressure resistance performance (HPT) and the slow crack growth resistance (NPT) as defined for the multimodal polyethylene composition of the present invention as described above or below in the claims.

The present invention is further concerned with the use of the multimodal polyethylene composition according to the present invention as described above or below in the claims for increasing the pressure resistance and/or the slow crack growth resistance of a pipe or fitting.

The results of the inventive embodiments are described and discussed in detail in the example section below.

**Measurement methods**

The following definitions of terms and determination methods apply to the above general description of the invention as well as to the below examples, unless otherwise defined.

**a) Melt Flow Rate**

The melt flow rate (MFR) was determined according to ISO 1133 and is indicated in g/10 min. The MFR is an indication of the flowability and hence the processability of the polymer. The higher the melt flow rate, the lower the viscosity of the polymer. Here, the MFR was determined at a temperature of 190°C and under a load of 2.16 kg, 5.0 kg or 21.6kg.

**b) Density**

Density was measured according to ISO 1183-1:2004 (method A) on compression moulded specimen prepared according to EN ISO 1872-2 (Feb 2007) and is given in $kg/m^3$.

**c) Quantification of microstructure by NMR spectroscopy**

Quantitative nuclear-magnetic resonance (NMR) spectroscopy was used to quantify the comonomer content, molecular chain length and the degree of polymerization of the polymers.

Quantitative $^{13}$C{$^{1}$H} NMR spectra recorded in the molten-state using a Bruker Avance III 500 NMR spectrometer operating at 500.13 and 125.76 MHz for $^{1}$H and $^{13}$C respectively. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382., Parkinson, M., Klimke, K., Spiess, H.W., Wilhelm, M., Macromol. Chem. Phys. 2007;208:2128., Castignolles, P., Graf, R., Parkinson, M., Wilhelm, M., Gaborieau, M., Polymer 50 (2009) 2373). Standard single-pulse excitation was employed utilising the transient NOE at short recycle delays of 3s (Pollard, M., Klimke, K., Graf, R., Spiess, H.W., Wilhelm, M., Sperber, O., Piel, C., Kaminsky, W., Macromolecules 2004;37:813., Klimke, K., Parkinson, M., Piel, C., Kaminsky, W., Spiess, H.W., Wilhelm, M., Macromol. Chem. Phys. 2006;207:382.) and the RS-HEPT decoupling scheme (Filip, X., Tripon, C., Filip, C., J. Mag. Resn. 2005, 176, 239, Griffin, J.M., Tripon, C., Samoson, A., Filip, C., and Brown, S.P., Mag. Res. in Chem. 2007 45, S1, S198). A total of 16348 (16k) transients were acquired per spectrum. This setup was chosen due its high sensitivity towards sometimes low comonomer contents.

Quantitative $^{13}$C{$^{1}$H} NMR spectra were processed, integrated and quantitative properties determined using custom spectral analysis automation programs. All chemical shifts are internally referenced to the bulk methylene signal ($\delta+$) at 30.00 ppm (J. Randall, Macromol. Sci., Rev. Macromol. Chem. Phys. 1989, C29, 201).

Characteristic signals corresponding to the incorporation of 1-hexene were observed (J. Randall, Macromol. Sci., Rev. Macromol. Chem. Phys. 1989, C29, 201.) and all contents calculated with respect to all other monomers present in the polymer.

Characteristic signals resulting from isolated 1-hexene incorporation i.e. EEHEE comonomer sequences, were observed. Isolated 1-hexene incorporation was quantified using the integral of the signal at 38.2 ppm assigned to the *B4 sites, accounting for the number of reporting sites per comonomer:

$$H = I_{*B4}$$

When characteristic signals resulting from consecutive 1-hexene incorporation, i.e. EHHE comonomer sequences were observed, such consecutive 1-hexene incorporation was quantified using the integral of the signal at 40.4 ppm assigned to the $\alpha\alpha$B4B4 sites accounting for the number of reporting sites per comonomer:

$$HH = 2 * I_{\alpha\alpha B4B4}$$

When characteristic signals resulting from non consecutive 1-hexene incorporation, i.e. EHEHE comonomer sequences were observed, such non-consecutive 1-hexene incorporation was quantified using the integral of the signal at 24.6 ppm assigned to the $\beta\beta$B4B4 sites accounting for the number of reporting sites per comonomer:

$$HEH = 2 * I_{\beta\beta B4B4}$$

Due to the overlap of the signals from the *B4 and *$\beta$B4B4 sites from isolated (EEHEE) and non-consecutively incorporated (EHEHE) 1-hexene respectively the total amount of isolated 1-hexene incorporation is corrected based on the amount of non-consecutive 1-hexene present:

$$H = I_{*B4} - 2 * I_{\beta\beta B4B4}$$

With no other signals indicative of other comonomer sequences, i.e. 1-hexene chain initiation, observed the total 1-hexene comonomer content was calculated based solely on the amount of isolated (EEHEE), consecutive (EHHE) and non-consecutive (EHEHE) 1-hexene comonomer containing sequences:

$$H_{total} = H + HH + HEH$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*( I_{2S} + I_{3S} )$$

The relative content of ethylene was quantified using the integral of the bulk methylene ($\delta$+) signals at 30.00 ppm:

$$E = (1/2)*I_{\delta+}$$

The total ethylene content was calculated based the bulk methylene signals and accounting for ethylene units present in other observed comonomer sequences or end-groups:

$$E_{total} = E + (2/2)*H + (1/4)*HH + (3/4)*HEH + (3/2)*S$$

The total mole fraction of 1-hexene in the polymer was then calculated as:

$$fH = H_{total} / ( E_{total} + H_{total} )$$

The total comonomer incorporation of 1-hexene in mole percent was calculated from the mole fraction in the usual manner:

$$H [mol\%] = 100 * fH$$

The total comonomer incorporation of 1-hexene in weight percent was calculated from the mole fraction in the standard manner:

$$H [wt\%] = 100 * ( fH * 84.16) / ( (fH * 84.16) + ((1-fH) * 28.05) )$$

The comonomer incorporation of 1-hexene in mole percent in high Mw fraction was calculated from the total comonomer incorporation in the usual manner:

$$H \text{ in HMW } [mol\%] = 100 \% * H [mol\%] / \text{Split of HMW fraction } \%$$

**d) Determination of Molecular weights, molecular weight distribution, polydispersity index**

Weight average molecular weight (Mw), number average molecular weight (Mn) and molecular weight distribution (MWD) are measured by Gel Permeation Chromatography (GPC) according to the following method:
Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \times M_i)}{\sum_{i=1}^{N} A_i} \quad (2)$$

$$M_z = \frac{\sum_{i=1}^{N}(A_i \times M_i^2)}{\sum_{i=1}^{N}(A_i/M_i)} \; (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 µL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \qquad \alpha_{PS} = 0.655$$

$$K_{PE} = 39 \times 10^{-3} \text{ mL/g}, \qquad \alpha_{PE} = 0.725$$

$$K_{PP} = 19 \times 10^{-3} \text{ mL/g}, \qquad \alpha_{PP} = 0.725$$

A third order polynomial fit was used to fit the calibration data. All samples were prepared in the concentration range of 0.5 - 1.0 mg/ml and dissolved at 160 °C for 3 hours for PE under continuous gentle shaking.

**e) Viscosity measurements**

Rotational and oscillatory rheometry was generally conducted according to the following standards:

ISO 3219-1 :2021   Part 1: Vocabulary and symbols for rotational and oscillatory rheometry
ISO 3219-2:2021   Part 2: General principles of rotational and oscillatory rheometry

One method which is used in connection with the present invention relates to the rheology of the polymer and is based on determination of the viscosity of the polymer at a very low, constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow. The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm. A 1.5 mm thick polymer sample is inserted between the plates.

The sample was temperature conditioned during 2 min before the measurement is started. The measurement was performed at 190°C. After temperature conditioning the measurement started by applying the predetermined stress. The stress was maintained during 1800 s to let the system approach steady state conditions. After this time the measurement started and the viscosity was calculated. The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

**f) Self-nucleation and Annealing method (SSA)**

*a) Lamella thickness*

Successive Self-Nucleation/Annealing (SSA) technique enhances the potential molecular fractionation that can occur during crystallization by magnifying the small effects through annealing of the unmelted crystals at each stage of the process. General references and additional information can be found in a review article by Müller and Arnal [A.J. Müller, M.L. Arnal, Thermal fractionation of polymers, Prog. Polym. Sci. 30 (2005) 559-603]. SSA was performed on an indium and tin calibrated TA Instruments Q2000 differential scanning calorimeter equipped with RCS90 cooling system. A sample mass of 5-10 mg was used from compression moulded sheets. All samples were encapsulated in Tzero aluminium pans. Ultra-high purity dry nitrogen was used as an inert atmosphere. The experimental protocol is as follows:

(a) Erasure of previous thermal history by heating the sample from room temperature to 180°C at 20°C/min and by holding isothermally for 5 minutes.

(b) In this method, 8 subsequent cooling/heating cycles at 10°C/min were utilized and the first isothermal crystallization temperature was selected to be 126°C. The duration of each isothermal crystallization step is 5 minutes. After each isothermal crystallization step, the sample is cooled to 30°C and held isothermally for 5 minutes.

(c) The subsequent isothermal temperatures were always maintained at 5°C lower than the previous step, i.e., the sample is heated from 30°C to the second isothermal crystallization temperature of 121°C.

(d) After the last isothermal crystallization step at 91°C, the sample is cooled down to 0°C, and the melting curve is obtained by heating the cooled sample at a heating rate of 10°C/min up to 180°C.

The final heating run after an SSA treatment exhibits a series of melting peaks that correspond to the number of SSA cycles, where annealing was promoted. Gibbs-Thompson equation can then be used to establish a correlation between melting temperature and lamellae thickness:

$$T_m = T_m^0\{1 - (2\sigma_e/\Delta H_m^0 L_c)\}, \tag{4}$$

where $T_m^0$ is equilibrium melting point of infinitely thick crystal, $\sigma_e$ is the specific surface energy, $\Delta H_m^0$ is enthalpy of melting per mass unit, $L_c$ is lamellae thickness and $T_m$ is melting temperature of the lamellae. $T_m^0$, $\sigma_e$, and $\Delta H_m^0$ have been taken to be 415 K, 93 × 10-3 J/m³, and 3 × 10⁸ J/m³, respectively [L. Mandelkern, R.G. Alamo, Thermodynamic quantities governing melting, in: Phys. Prop. Polym. Handb., Springer, 2007: pp. 165-186.].

The melt enthalpy is calculated from the quotient of the heat flow volume and initial weight of the sample between the extrapolated onset and end of melting, as described in ISO 11357-3. A fixed integration approach, in steps of 10°C, is used for the melting curve quantification to determine the lamellae thickness distribution.

**g) Hydrostatic pressure resistance (HPT)**

Hydrostatic pressure resistance was determined at 80 °C and 5.6 MPa, or at 20 °C and 12.4 MPa, determined according to ISO 1167-1:2006.

The resistance to internal pressure has been determined in a pressure test on pressure test on un-notched 32 mm x 3mm SDR 11 pipes having a length of 450 mm is carried out in water-inside and water-outside environment according to ISO 1167-1:2006. End caps of type A were used. The time to failure is determined in hours. A hoop stress of 5.6 MPa at a temperature of 80°C or a hoop stress of 12.4 MPa at a temperature of 20°C was applied.

**h) Pressure test on notched pipes (NPT); Slow crack propagation resistance**

The slow crack propagation resistance is determined according to ISO 13479-2009 in terms of the number of hours the pipe withstands a certain pressure at a certain temperature before failure. The pressure test is carried out on notched SDR11 pipes having a outer diameter of 110 mm. A pressure resulting in a stress of 4.6 MPa and a temperature of 80 °C have been used. Notching is made with a climb milling cutter with a 60° included-angle V-cutter conforming to ISO 6108, having a cutting rate of 0.010 ± 0.002 (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference. The length of the notch is 110 ± 1 mm.

$$h = 0.5 \left[ d_{em} - \sqrt{(d_{em}^2 - b_S^2)} \right] + 0.866\, b_S$$

where

$b_s$     is the width of machined surface of the notch in mm;

$d_{em}$     is the measured mean pipe outside diameter in mm.

### i) Strain Hardening Modulus

Strain hardening modulus of the compounds was obtained from a tensile stress-strain curve above the natural draw ratio and represents the slope of the increase in the stress-strain trend at very high strains (the strain hardening regime). It was measured at 80°C and 20 mm/min on preconditioned (120°C/1h) 300 $\mu$m thick specimens according to ISO 18488.

### j) Charpy notched impact strength (NIS)

Charpy notched impact strength was determined according to ISO179/1eA:2000 on V-notched samples of 80*10*4 mm at +23 °C and -20 °C. Samples were milled from plaques of 4 mm thickness prepared by compression molding according to ISO 293:2004 using the conditions defined in chapter 3.3 of ISO 1872-2:2007.

### k) Tensile modulus and tensile strain at break

Tensile modulus and tensile strain at break were measured according to ISO 527-2 (cross head speed = 1 mm/min; test speed 50 mm/min at 23 °C) using injection molded specimens as described in EN ISO 1873-2 (dog bone shape, 4 mm thickness). The measurement is done after 96 h conditioning time of the specimen.

### Examples

Polymerization of IE1, IE2, CE1 and CE2 was conducted under two operating conditions wherein a prepolymerisation reactor (PPR) was in bypassed condition in the preparation of the polymers of IE1 and IE2, whereas it was in service during the preparation of the polymers of CE1 and CE2. According to CE3 a commercial high density bimodal polyethylene available from Borealis AG was produced. Process parameters and production data for the processes are summarized in Table 1. The polymerization catalyst used in all runs was a non-silica supported MgCl$_2$-based ZN catalyst. This catalyst was prepared as described in the examples of WO 2015/078924 A1. Key difference between !E1 and IE2 are split ratios of 48.3 and 50.7 respectively. Comparing the runs conducted with and without PPR, at comparable split, two pairs that can be compared are IE1 - CE1, and IE2 - CE2.

The process conditions and polymer properties of the inventive examples !E1 and IE2 as well as the comparative examples CE1 to CE3 are shown in Tables 1 and 2 below.

Table 1: Process parameters used for the inventive resin

| Example | IE1 | IE2 | CE1 | CE2 | CE3 |
|---|---|---|---|---|---|
| **A1 Prepoly reactor** | PPR off-line | PPR off-line | PPR online | PPR online | PPR online |
| Temp. (°C) | | | 60 | 60 | 60 |
| Press. (kPa) | | | 5700 | 5706 | 5500 |
| Catalyst feed (g/h) | | | 4.8 | 5.7 | |
| C2 (kg/h) | | | 2.0 | 2.0 | 450 |

(continued)

| Example | IE1 | IE2 | CE1 | CE2 | CE3 |
|---|---|---|---|---|---|
| **A1 Prepoly reactor** | PPR off-line | PPR off-line | PPR online | PPR online | PPR online |
| H2 (g/h) | | | 6.9 | 6.8 | |
| Split (%) | | | 1.8 | 1.7 | 1.0 |
| **A2 loop reactor** | | | | | |
| Temp. (°C) | 95 | 95 | 95 | 95 | 95 |
| Press. (kPa) | 5780 | 5780 | 5495 | 5496 | 5500 |
| C2 conc. (mol-%) | 3.1 | 3.2 | 3.6 | 3.6 | |
| H2/C2 ratio (mol/kmol) | 578 | 544 | 451 | 494 | |
| Split (%) | 52 | 49 | 51 | 48 | 51 |
| C3 feed (kg/h) | 86 | 86 | 114 | 114 | |
| Production rate (kg/h) | 46 | 45 | 40 | 40 | |
| Density (kg/m$^3$) | 970.6 | 970.7 | 969.5 | NA | 970.8 |
| MFR$_2$ (g/10 min) | 400 | 130 | 302 | 200 | 330 |
| **A3 GPR** | | | | | |
| Temp. (°C) | 85 | 85 | 85 | 85 | 85 |
| Press. (kPa) | 2000 | 2000 | 2000 | 2000 | 2000 |
| H2/C2 ratio (mol/kmol) | 35.9 | 47.2 | 23.5 | 44.9 | |
| C6/C2 ratio (mol/kmol) | 38.2 | 30.8 | 18.4 | 19.3 | |
| split % | 48.3 | 50.7 | 46.7 | 50.2 | 49 |
| C2 partial pressure (kPa) | 255 | 332 | 135 | 137 | |
| Density (kg/m$^3$) | 950.0 | 950.7 | 951.0 | 951.1 | 947 |
| MFR$_5$ (g/10 min) | 0.22 | 0.22 | 0.19 | 0.25 | 0.18 |
| MFR$_{21}$ (g/10 min) | 6.0 | 6.1 | 6.1 | 7.0 | 5.8 |
| **Mixer powder** | | | | | |
| Density (kg/m$^3$) | 950.1 | 950.9 | 951.5 | 951.2 | NA |
| MFR$_5$ (g/10 min) | 0.22 | 0.22 | 0.19 | 0.26 | NA |
| MFR$_{21}$ (g/10 min) | 6.7 | 5.9 | 6.1 | 7.9 | NA |
| **Extrusion** | | | | | |
| SEI (kWh/t) | 186 | 227 | 195 | 243 | 240 |
| **Pellet** | | | | | |
| MFR$_5$ (g/10 min) | 0.23 | 0.21 | 0.19 | 0.28 | 0.18 |
| MFR$_{21}$ (g/10 min) | 6.9 | 5.7 | 6.5 | 7.9 | 7.21 |
| Density (kg/m$^3$) | 962.9 | 963.5 | 963.2 | 963.6 | 959.7 |
| White spot area | 0.044 | 0.037 | 0.073 | 0.039 | NA |
| White spots | 3.0 | 4.7 | 3.0 | 3.0 | 4.5 |
| Carbon black (%) | 2.5 | 2.6 | | 2.5 | 2.28 |

**Table 2: Comparison of molecular weight distribution for inventive resins and references**

| Ex. | Mn | Mw | Mz | Mz+1 | PDI |
|---|---|---|---|---|---|
| IE1 | 8320 | 260000 | 1460000 | 2810000 | 31.3 |
| CE1 | 8075 | 287500 | 1700000 | 3255000 | 35.7 |
| IE2 | 10300 | 264500 | 1495000 | 3020000 | 25.7 |
| CE2 | 7835 | 247500 | 1435000 | 2890000 | 31.6 |
| CE3 | 8120 | 297000 | 1705000 | 3060000 | 36.6 |

It has to be noted that C6 feed data given in the tables do not give indication of the co-monomer content in the polymer, and $^{13}C\{^1H\}$ NMR analysis has been done to estimate the actual co-monomer content, the molecular chain length, the degree of polymerization and the branches per chain. The results are shown in Table 3 below.

**Table 3: Summary of $^{13}C\{^1H\}$ NMR analysis results**

| Ex. | co-monomer content (wt.%) | Chain Length | Degree of polymerization | Branches per chain |
|---|---|---|---|---|
| IE1 | 1.01 | 1040 | 520 | 1.8 |
| CE1 | 0.98 | 855 | 428 | 1.4 |
| IE2 | 0.75 | 1198 | 599 | 1.5 |
| CE2 | 1.18 | 818 | 409 | 1.6 |
| CE3 | 1.4 | 803 | 402 | 1.9 |

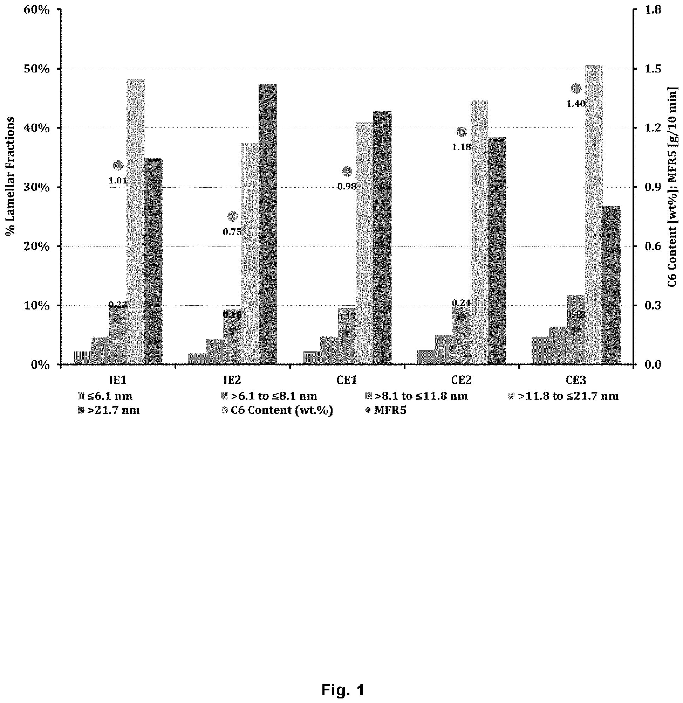

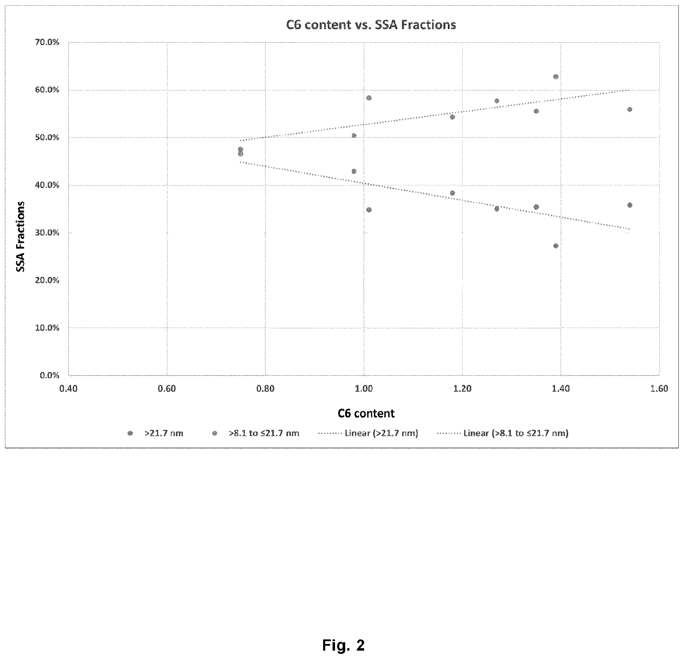

A deeper understanding of crystalline / lamellar morphology of these examples and comparative examples are therefore explored through Successive Self-Nucleation and Annealing (SSA) method, as described in the experimental section above, and results are given in Table 4. A corresponding plot of lamellar thickness range and % lamellar fractions is shown in Figure 1. A direct correlation can be seen between the co-monomer content and SSA data (Figure 2), wherein decrease in the thickest lamellar fraction (>21.7nm) is seen with increase in co-monomer content, and a proportional increase is seen for the second thicker lamellar fraction (> 11.8 nm to ≤21.7nm).

This can be understood as the effect of co-monomer insertion in homopolymer chains, leading to reduction in crystallinity (thickest lamellae), and increase in lamellae of lower thicknesses i.e. tie molecules (Figure 2).

**Table 4: Summary of SSA analysis results**

| Ex. | >3.6 to ≤4.2 nm | >4.2 to ≤5.0 nm | ≤5.0 nm | >5.0 to ≤6.1 nm | ≤6.1 nm | >6.1 to ≤8.1 nm | >5.0 to ≤8.1 nm | >8.1 to ≤11.8 nm | >11.8 to ≤21.7 nm | >21.7 nm |
|---|---|---|---|---|---|---|---|---|---|---|
| IE1 | 0.00% | 0.30% | 0.30% | 1.90% | 2.20% | 4.70% | 8.80% | 10.00% | 48.30% | 34.80% |
| CE1 | 0.00% | 0.33% | 0.33% | 1.80% | 2.14% | 4.65% | 8.59% | 9.53% | 40.86% | 42.83% |
| IE2 | 0.00% | 0.23% | 0.23% | 1.56% | 1.79% | 4.19% | 7.55% | 9.20% | 37.36% | 47.46% |
| CE2 | 0.00% | 0.46% | 0.46% | 2.02% | 2.48% | 4.92% | 9.42% | 9.72% | 44.57% | 38.31% |
| CE3 | 0.29% | 1.29% | 1.57% | 3.12% | 4.69% | 6.38% | 14.19% | 11.69% | 50.54% | 26.70% |

Table 5 summarizes mechanical properties of the samples, such as Charpy notched impact at 23 °C and - 20 °C, strain hardening modulus, tensile modulus, tensile stress and tensile strain at yield, and tensile stress and tensile strain at break.

**Table 5: Summary of mechanical property results**

| Ex. | NIS (-20°C) (kJ/m²) | NIS (23°C) (kJ/m²) | SH modulus (MPa) | TM (MPa) | Tensile Stress at Yield (MPa) | Nominal strain at break (%) |
|---|---|---|---|---|---|---|
| IE1 | 17.1 | 33.1 | 65.6 | 1115 | 26 | 521.7 |
| CE1 | 17.2 | 34 | 54 | 1091 | 25.5 | 574.8 |
| IE2 | 19.5 | 21.4 | 53.6 | 1131 | 26.1 | 642 |
| CE2 | 13.3 | 26.9 | 41.3 | 1084 | 25.8 | 642 |
| CE3 | 14.2 | 33.3 | 78.1 | 1077 | 25 | 690 |

The following trends can be derived from these mechanical properties:

- Comparing the runs with and without PPR (pairs IE1 and CE1, pairs IE2 and CE2), an improvement in both tensile modulus and strain hardening modulus can be seen. Further improvement in strain hardening modulus (with optimization of tensile modulus) may be achieved with increase in co-monomer content.

- Strain hardening modulus of samples without prepolymerization is lower than in the commercial reference CE3. However, the inventive examples contain significantly lower co-monomer content than CE3.

- All runs show tensile yield stress in acceptable range.

- Elongation at break values for all runs fulfil ISO 4427 requirement (350%),

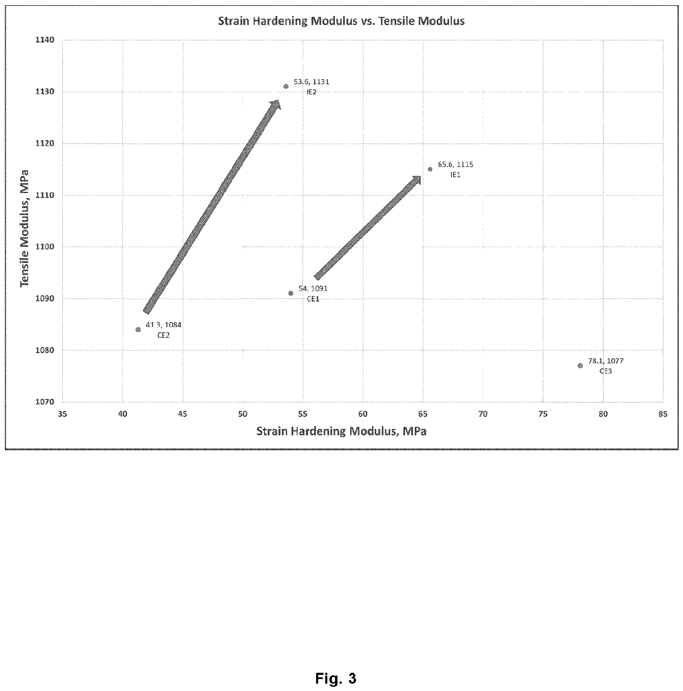

A plot of tensile modulus vs. strain hardening modulus is shown in Figure 3. Thus, it is apparent, comparing the results of IE1 and CE1 or those of IE2 and CE2, that the multimodal polyethylene compositions of the present invention are simultaneously improved in tensile modulus and strain hardening (SH) modulus, whereas typically the improvement of one property is at the sacrifice of the other. Thus, the invention provides an improved balance between both properties.

HPT and NPT pressure performance test results are given in Table 6 below.

**Table 6: Summary of HPT and NPT test results**

| Ex. | NPT (hours) | HPT (hours at 80°C, 6.43MPa) | HPT (hours at 80°C, 5.98MPa) | HPT (hours at 80°C, 5.6MPa) | HPT (hours at 20°C, 12.6MPa) | HPT (hours at 20°C, 12.4 MPa) |
|---|---|---|---|---|---|---|
| IE1 | ≥5136 | 27 | 2012 | ≥8220 | 502 | 1669 |
| CE1 | 2110 | 9 | 36 | 3107 | 225 | 348 |
| IE2 | 759, 861 | 1314 | 4673 | 6690 | 1148 | 2884 |
| CE2 | 264 | 4 | 162 | 2306 | 498 | 884 |
| CE3 | 5400 | | | 1914 | | 742 |

It can be understood from the above table that the inventive runs IE1 and IE2 produced without PPR show better HPT performance, both at room temperature and elevated temperatures. Inventive runs IE1 and IE2 produced without PPR also show better NPT performance as compared to comparative runs CE1 and CE2 produced with PPR. The commercial run CE3 shows high NPT performance, which is directly consequent of higher co-monomer in the sample, but HPT performance is insufficient. Overall, inventive runs IE1 and IE2 without PPR provide clear improvement in balance of HPT and NPT performance, wherein the minimum required NPT failure time or more than 500 hrs is achieved, even at relatively low co-monomer content, while maintaining high pressure performance.

Thus, the above data show an improved correlation of final polymer properties, i.e. sagging and pressure performance and the invention has surprisingly shown the impact of chain length and co-monomer content, and the consequent role of lamellar morphology, in particular the two thickest lamellar fractions.

Inventive runs IE1 and IE2 produced without PPR show higher chain length, achieving simultaneous improvement of several contradicting properties (such as HPT and NPT performance) by balance of lamellar concentrations. Higher concentration of thickest lamellae with higher length and co-monomer insertion in such a molecular structure achieves this unique balance.

**Claims**

1. A multimodal polyethylene composition comprising a base resin comprising a copolymer of ethylene and at least one comonomer selected from alpha-olefins having from 3 to 10 carbon atoms,

   wherein the base resin has

   (a) a density of at least 945.0 $kg/m^3$ and not more than 955.0 $kg/m^3$, determined according to ISO 1183-1,
   (b) a melt flow rate $MFR_5$ (190°C, 5 kg), determined according to ISO 1133, of from 0.15 to 0.25 g/10 min.,

   and wherein the polyethylene composition has

   (c) a molecular chain length, determined according to Quantitative $^{13}C\{^1H\}$ NMR analysis, determined as described herein, of at least 850 and not more than 1200, and
   (d) a tensile modulus of at least 900 MPa and not more than 1200 MPa, determined according to ISO 527-2.

2. The multimodal polyethylene composition according to claim 1 having:
   (e) a strain hardening modulus of at least 45 MPa and not more than 85 MPa, determined as described herein.

3. The multimodal polyethylene composition according to claim 1 or 2 having
   (f) a content of a lamellar fraction having a lamellar thickness of more than 21.7 nm, determined according to the self-nucleation and annealing method (SSA) as described herein, of from 28 to 52 wt.-%, based on the total crystalline fraction.

4. The multimodal polyethylene composition according to any one of the preceding claims having
   (g) a content of a lamellar fraction having a lamellar thickness in the range of greater than 11.8 nm to 21.7 nm, determined according to the self-nucleation and annealing method (SSA) as described herein, of from 33.0 to 52 wt.-%, based on the total crystalline fraction.

5. The multimodal polyethylene composition according to any one of the preceding claims having

   (h-1) a hydrostatic pressure resistance (HPT) at 80 °C and 5.6 MPa, determined according to ISO 1167-1:2006 and as described herein, of at least 2000 h failure time, and/or
   (h-2) a hydrostatic pressure resistance (HPT) at 20 °C and 12.4 MPa, determined according to ISO 1167-1:2006 and as described herein, of at least 1400 h; and/or
   (h-3) a slow crack growth resistance in a notched pipe test (NPT) according to ISO 13479-2009 at 80 °C and 4.6 MPa, and as described herein, of at least 500 h failure time.

6. The multimodal polyethylene composition according to any one of the preceding claims having
   (i) a Charpy notched impact strength (NIS), determined according to ISO 179-1 at 23 °C and as described herein, of at least 20.0 $kJ/m^2$.

7. The multimodal polyethylene composition according to any one of the preceding claims having
   (j) a viscosity at a shear stress of 747 Pa (eta747), determined as described herein, of at least 500 Pa . s.

8. The multimodal polyethylene composition according to any one of the preceding claims, wherein the base resin has
   (k) a comonomer content of not more than 1.20 wt.-%, based on the total weight of the base resin.

9. The multimodal polyethylene composition according to any one of the preceding claims, wherein the base resin has
   (l) a degree of polymerization of $\geq 450$, determined according to Quantitative $^{13}C\{^1H\}$ NMR analysis, determined as described herein.

10. A method of producing a multimodal polyethylene composition according to any one of the preceding claims, comprising the steps of polymerizing ethylene and at least one comonomer selected from alpha-olefins having from 3 to 10 carbon atoms in at least two polymerization stages in the presence of a polymerization catalyst, preferably a Ziegler-Natta catalyst, wherein said at least one comonomer is present in at least one of the polymerization stages.

11. The method according to claim 10, wherein the polymerization is conducted without a prepolymerization stage.

12. The method according to claim 10 or 11, wherein the polymerization is conducted in a slurry polymerization reactor and at least one gas phase polymerization reactor.

13. The method according to claim 12, wherein the catalyst is directly fed to the slurry polymerization reactor.

14. A pipe or a fitting comprising the multimodal polyethylene composition according to any one of claims 1 to 9.

15. Use of the multimodal polyethylene composition according to any one of claims 1 to 9 for increasing the pressure resistance and/or the slow crack growth resistance of a pipe or fitting.

**Fig. 1**

**Fig. 2**

Fig. 3

Europäisches
Patentamt

European
Patent Office

Office européen
des brevets

# EUROPEAN SEARCH REPORT

Application Number

EP 22 21 5948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 860 202 B1 (BOREALIS AG [AT]) 30 May 2018 (2018-05-30) * paragraphs [0001], [0148] - [0154] * * examples 1-3 * * table 1 * * claims 1-14 * | 1-15 | INV. C08F2/00 C08F210/16 |
| X | EP 3 055 335 B1 (BOREALIS AG [AT]) 12 December 2018 (2018-12-12) * paragraphs [0001], [0262] - [0268] * * example 1 * * table 1 * * claims 1-14 * | 1-15 | |
| X | EP 2 894 195 A1 (ABU DHABI POLYMERS CO LTD BOROUGE [AE]; BOREALIS AG [AT]) 15 July 2015 (2015-07-15) | 1-10,12,14 | |
| A | * paragraph [0001] * * example 1; table 1 * * claims 1-15 * | 11,13,15 | |
| X | WO 2015/051879 A1 (BOREALIS AG [AT]) 16 April 2015 (2015-04-16) | 1-14 | TECHNICAL FIELDS SEARCHED (IPC) C08F |
| A | * page 40ff. * * example 1; table 1 * * claims 1-15 * | 15 | |

The present search report has been drawn up for all claims

| Place of search | Date of completion of the search | Examiner |
|---|---|---|
| Munich | 12 May 2023 | Neumeier, Michael |

EPO FORM 1503 03.82 (P04C01)

## ANNEX TO THE EUROPEAN SEARCH REPORT
## ON EUROPEAN PATENT APPLICATION NO.

EP 22 21 5948

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2023

| Patent document cited in search report | | | Publication date | Patent family member(s) | | | Publication date |
|---|---|---|---|---|---|---|---|
| EP 2860202 | B1 | | 30-05-2018 | AU | 2014334203 | A1 | 03-03-2016 |
| | | | | CN | 105612185 | A | 25-05-2016 |
| | | | | EP | 2860202 | A1 | 15-04-2015 |
| | | | | JP | 6212633 | B2 | 11-10-2017 |
| | | | | JP | 2016536387 | A | 24-11-2016 |
| | | | | KR | 20160033766 | A | 28-03-2016 |
| | | | | PL | 2860202 | T3 | 30-11-2018 |
| | | | | WO | 2015051882 | A1 | 16-04-2015 |
| EP 3055335 | B1 | | 12-12-2018 | AU | 2014334201 | A1 | 21-01-2016 |
| | | | | CN | 105658677 | A | 08-06-2016 |
| | | | | EP | 2860201 | A1 | 15-04-2015 |
| | | | | EP | 3055335 | A1 | 17-08-2016 |
| | | | | JP | 2016532760 | A | 20-10-2016 |
| | | | | KR | 20160030981 | A | 21-03-2016 |
| | | | | PL | 3055335 | T3 | 30-08-2019 |
| | | | | WO | 2015051880 | A1 | 16-04-2015 |
| EP 2894195 | A1 | | 15-07-2015 | AU | 2014372845 | B2 | 02-02-2017 |
| | | | | BR | 112016014939 | A2 | 23-01-2018 |
| | | | | CL | 2016001498 | A1 | 24-02-2017 |
| | | | | CN | 105874002 | A | 17-08-2016 |
| | | | | EP | 2894195 | A1 | 15-07-2015 |
| | | | | MY | 188787 | A | 31-12-2021 |
| | | | | PH | 12016500597 | A1 | 13-06-2016 |
| | | | | SG | 11201602550T | A | 28-04-2016 |
| | | | | US | 2017002187 | A1 | 05-01-2017 |
| | | | | US | 2021070969 | A1 | 11-03-2021 |
| | | | | WO | 2015096900 | A1 | 02-07-2015 |
| WO 2015051879 | A1 | | 16-04-2015 | AU | 2014334200 | A1 | 21-01-2016 |
| | | | | CN | 105899546 | A | 24-08-2016 |
| | | | | EP | 2860204 | A1 | 15-04-2015 |
| | | | | JP | 2016531985 | A | 13-10-2016 |
| | | | | KR | 20160016911 | A | 15-02-2016 |
| | | | | WO | 2015051879 | A1 | 16-04-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2743305 A1
- EP 3293208 A1
- EP 3088458 A1
- US 4582816 A
- US 3405109 A
- US 3324093 A
- EP 479186 A
- US 5391654 A
- WO 2004055068 A1
- WO 2004055069 A1
- WO 2015078924 A
- EP 0810235 A1
- US 5026795 A
- US 4803251 A
- US 4532311 A
- US 4855370 A
- EP 560035 A
- WO 2015078924 A1

### Non-patent literature cited in the description

- **SCHEIRS ; BOHM ; BOOT ; LEEVERS.** PE100 Resins for Pipe Applications. *TRIP,* 1996, vol. 4 (12), 408-415
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **J. RANDALL.** *Macromol. Sci., Rev. Macromol. Chem. Phys.,* 1989, vol. C29, 201
- Encyclopedia of Polymer Science and Engineering. vol. 14, 492-509
- **A.J. MÜLLER ; M.L. ARNAL.** Thermal fractionation of polymers. *Prog. Polym. Sci.,* 2005, vol. 30, 559-603
- Thermodynamic quantities governing melting. **L. MANDELKERN ; R.G. ALAMO.** Phys. Prop. Polym. Handb. Springer, 2007, 165-186